# EUROPEAN PATENT APPLICATION

(11) **EP 4 668 895 A1**
(43) Date of publication of application: **24.12.2025**
(21) Application number: 24769788.1
(22) Date of filing: 05.03.2024
(51) Int. Cl.: H04W 52/02

(54) **COMMUNICATION METHOD AND APPARATUS**

(30) Priority: 10.03.2023 CN 202310261901
(71) Applicant: Huawei Technologies Co., Ltd., Shenzhen, Guangdong 518129 (CN)
(72) Inventor: HUANG, Guogang, Shenzhen, Guangdong 518129 (CN); GUO, Yuchen, Shenzhen, Guangdong 518129 (CN)
(74) Representative: Pfenning, Meinig & Partner mbB
(86) International application number: PCT/CN2024/080010
(87) International publication number: WO 2024/188094

(57) **Abstract**

Embodiments of this application provide a communication method, which may be applied to a communication system that supports IEEE 802.11 series protocols (for example, Wi-Fi 7 and Wi-Fi 8). The method includes: An AP MLD generates a first frame. The first frame includes first information and second information, the first information indicates that a link corresponding to an affiliated first AP of the AP MLD is unavailable, and the second information indicates that the first AP is in a power saving mode. The AP MLD sends the first frame. According to this application, when the first AP is in the power saving mode, the first information indicates that the link corresponding to the first AP is unavailable, to avoid a transmission failure caused by performing transmission on the link corresponding to the first AP by a first non-AP MLD when the first AP is in the power saving mode.

## Description

This application claims priority to Chinese Patent Application No. 202310261901.5, filed with the China National Intellectual Property Administration on March 10, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

Data traffic rapidly grows with development of the mobile Internet and popularization of smart terminals. A wireless local area network (wireless local area network, WLAN) technology has become one of mainstream mobile broadband access technologies due to advantages of a high rate and low costs. A concept of a multi-link device (multi-link device, MLD) is proposed in a protocol currently applied to a WLAN. The MLD may be an access point multi-link device (access point MLD, AP MLD), or may be a non-access point MLD (non-AP MLD).

To reduce energy consumption of the AP MLD, a wakeup-based AP MLD power saving mechanism is defined. To be specific, indication information of an AP power management mode is added to a reduced neighbor report element (reduced neighbor report element, RNR element) sent by at least one affiliated AP (affiliated AP) of the AP MLD, to indicate whether the affiliated AP is in a power saving mode. When the affiliated AP is in the power saving mode, the affiliated AP may be in a sleep state in some time periods. When the affiliated AP is in the sleep state, transmission performed by an extremely high throughput (extremely high throughput, EHT) non-AP MLD on a link between the EHT non-AP MLD and the affiliated AP always fails. In other words, the EHT non-AP MLD does not support a power saving mechanism newly defined by an ultra-high reliability (ultra-high reliability, UHR) AP MLD.

### SUMMARY

This application provides a communication method and apparatus, to expect to avoid a transmission failure caused by performing transmission on a link corresponding to a first access point (access point, AP) by a first non-access point multi-link device (non-access point multi-link device, non-AP MLD) when the first AP is in a power saving mode.

According to a first aspect, a communication method is provided. The method may be performed by an access point multi-link device (access point multi-link device, AP MLD), or may be performed by a component (for example, a chip or a circuit) of the AP MLD. This is not limited. For ease of description, an example in which the method is performed by the AP MLD is used below for description.

The method includes: The AP MLD generates a first frame. The first frame includes first information and second information, the first information indicates that a link corresponding to an affiliated first AP of the AP MLD is unavailable, and the second information indicates that the first AP is in a power saving mode. The AP MLD sends the first frame.

That the AP MLD sends the first frame means that the AP MLD sends the first frame by using one or more affiliated APs of the AP MLD.

Based on the foregoing technical solution, the first frame sent by the AP MLD includes the first information and the second information. In this case, when the first AP is in the power saving mode, the first information can indicate that the link corresponding to the first AP is unavailable, so that a first non-AP MLD determines, based on the first information, that the link corresponding to the first AP is unavailable, to avoid a transmission failure caused by performing transmission on the link corresponding to the first AP by the first non-AP MLD when the first AP is in the power saving mode.

For example, the first non-AP MLD is an extremely high throughput (extremely high throughput, EHT) non-AP MLD.

For example, the first information is located in a first traffic identifier (traffic identifier, TID)-to-link mapping element included in the first frame. For example, if the first TID-to-link mapping element indicates that no TID is allowed to be transmitted on the link corresponding to the first AP, it indicates that the first information indicates that the link corresponding to the first AP is unavailable.

For example, the second information is located in an AP power management field corresponding to the first AP in a reduced neighbor report (reduced neighbor report, RNR) element included in the first frame, and/or is located in a power management field in a basic multi-link element included in the first frame. For example, if the first frame is a broadcast beacon (beacon) frame, the second information may be located in the AP power management field corresponding to the first AP in the RNR element included in the first frame, and/or be located in the power management field in the basic multi-link element included in the first frame. For another example, if the first frame is an association response frame sent by the AP MLD to the first non-AP MLD, or is a reassociation response frame sent by the AP MLD to the first non-AP MLD, the second information may be located in the power management field in the basic multi-link element included in the first frame.

With reference to the first aspect, in some implementations of the first aspect, the link corresponding to the first AP is in a power saving mode after a first moment, the first frame further includes third information, the third information indicates that the link corresponding to the first AP is unavailable after a second moment, and the second moment is not later than the first moment.

Based on the foregoing technical solution, the first non-AP MLD determines, based on the third information, that the link corresponding to the first AP is unavailable after the second moment.

For example, the third information indicates the second moment. Correspondingly, after the first non-AP MLD determines the second moment based on the third information, the second moment is used as a start moment at which the link corresponding to the first AP is unavailable, which is equivalent to that the third information indicates that the link corresponding to the first AP is unavailable after the second moment.

With reference to the first aspect, in some implementations of the first aspect, the link corresponding to the first AP is in the power saving mode within first duration after the first moment, the first frame further includes fourth information, the fourth information indicates that duration in which the link corresponding to the first AP is unavailable is second duration, and the second duration is not less than the first duration.

Based on the foregoing technical solution, the first non-AP MLD determines, based on the third information and the fourth information, that the link corresponding to the first AP is unavailable within the second duration after the second moment.

For example, the fourth information indicates the second duration. Correspondingly, after the first non-AP MLD determines the second duration based on the fourth information, the second duration is used as duration in which the link corresponding to the first AP is unavailable, which is equivalent to that the fourth information indicates that the duration in which the link corresponding to the first AP is unavailable is the second duration.

For example, the third information is located in a mapping switch time field in a first TID-to-link mapping element included in the first frame, and the fourth information is located in an expected duration field in the first TID-to-link mapping element.

With reference to the first aspect, in some implementations of the first aspect, the first frame is a beacon frame, the first frame further includes fifth information, and the fifth information indicates that the link corresponding to the first AP is unavailable.

Based on the foregoing technical solution, the first non-AP MLD determines, based on the fifth information, that the link corresponding to the first AP is unavailable.

For example, the fifth information is located in a disabled link indication field corresponding to the first AP in an RNR element included in the first frame.

With reference to the first aspect, in some implementations of the first aspect, the first frame is an association response frame, and before the AP MLD sends the first frame, the method further includes: The AP MLD receives an association request frame from a first non-AP MLD, where the association request frame is used to request to establish the link corresponding to the first AP; or the first frame is a reassociation response frame, and before the AP MLD sends the first frame, the method further includes: The AP MLD receives a reassociation request frame from a first non-AP MLD, where the reassociation request frame is used to request to establish the link corresponding to the first AP.

Based on the foregoing technical solution, if no association is established between the first non-AP MLD and the AP MLD, the AP MLD may send a (re)association response frame including the first information to the first non-AP MLD when receiving the (re)association request frame from the first non-AP MLD, so that the first non-AP MLD determines, based on the first information, that the link corresponding to the first AP is unavailable.

With reference to the first aspect, in some implementations of the first aspect, the method further includes: The AP MLD sends a second frame. An RNR element included in the second frame is used by the first non-AP MLD to discover the link corresponding to the first AP, a target beacon transmission time (target beacon transmission time, TBTT) information type field in a TBTT information header field corresponding to the first AP in the RNR element included in the second frame is set to 1, a TBTT information length field in the TBTT information header field is set to 3 or (3+X), and X is a positive integer.

That the AP MLD sends the second frame means that the AP MLD sends the second frame by using the one or more affiliated APs of the AP MLD.

In a possible implementation, the AP MLD sends the second frame before the AP MLD receives the association request frame or the reassociation request frame from the first non-AP MLD. In this implementation, the first frame and the second frame are different frames.

In another possible implementation, if the first frame is a broadcast beacon frame, the second frame and the first frame may be a same frame. When the first frame and the second frame are a same frame, the first non-AP MLD may discover the link corresponding to the first AP based on the RNR element included in the first frame (or the second frame), and the first non-AP MLD may determine, based on the first information included in the first frame (or the second frame), that the link corresponding to the first AP is unavailable.

Based on the foregoing technical solution, when the affiliated first AP of the AP MLD is in the power saving mode, the AP MLD may send the second frame, so that the first non-AP MLD can discover the link corresponding to the first AP based on the second frame. In addition, when the TBTT information field type that is in the TBTT information header field corresponding to the first AP and that is included in the second frame is set to 1, a pre-EHT non-AP MLD cannot identify the TBTT information field type. In this way, the pre-EHT non-AP MLD can be prevented from discovering the link corresponding to the first AP.

According to a second aspect, a communication method is provided. The method may be performed by a first non-AP MLD, or may be performed by a component (for example, a chip or a circuit) of the first non-AP MLD. This is not limited. For ease of description, an example in which the method is performed by the first non-AP MLD is used below for description.

The method includes: The first non-AP MLD receives a first frame from an AP MLD. The first frame includes first information and second information, the first information indicates that a link corresponding to an affiliated first AP of the AP MLD is unavailable, and the second information indicates that the first AP is in a power saving mode. The first non-AP MLD determines, based on the first information, that the link corresponding to the first AP is unavailable.

For beneficial effect of the second aspect and implementations of the second aspect, refer to the descriptions of the first aspect.

With reference to the second aspect, in some implementations of the second aspect, the link corresponding to the first AP is in a power saving mode after a first moment, the first frame further includes third information, the third information indicates that the link corresponding to the first AP is unavailable after a second moment, and the second moment is not later than the first moment.

It may be understood that, when the first frame includes the third information, after receiving the first frame, the first non-AP MLD may determine, based on the third information, that the link corresponding to the first AP is unavailable after the second moment.

With reference to the second aspect, in some implementations of the second aspect, the link corresponding to the first AP is in the power saving mode within first duration after the first moment, the first frame further includes fourth information, the fourth information indicates that duration in which the link corresponding to the first AP is unavailable is second duration, and the second duration is not less than the first duration.

It may be understood that, when the first frame further includes the fourth information, after receiving the first frame, the first non-AP MLD may determine, based on the third information and the fourth information, that the link corresponding to the first AP is unavailable within the second duration after the second moment.

With reference to the second aspect, in some implementations of the second aspect, the third information is located in a mapping switch time field in a first TID-to-link mapping element included in the first frame, and the fourth information is located in an expected duration field in the first TID-to-link mapping element.

With reference to the second aspect, in some implementations of the second aspect, the first frame is a beacon frame, the first frame further includes fifth information, and the fifth information indicates that the link corresponding to the first AP is unavailable.

With reference to the second aspect, in some implementations of the second aspect, the fifth information is located in a disabled link indication field corresponding to the first AP in an RNR element included in the first frame.

With reference to the second aspect, in some implementations of the second aspect, the first frame is an association response frame, and before the first non-AP MLD receives the first frame from the AP MLD, the method further includes: The first non-AP MLD sends an association request frame to the AP MLD, where the association request frame is used to request to establish the link corresponding to the first AP; or the first frame is a reassociation response frame, and before the first non-AP MLD receives the first frame from the AP MLD, the method further includes: The first non-AP MLD sends a reassociation request frame to the AP MLD, where the reassociation request frame is used to request to establish the link corresponding to the first AP.

With reference to the second aspect, in some implementations of the second aspect, the method further includes: The first non-AP MLD receives a second frame from the AP MLD. An RNR element included in the second frame is used by the first non-AP MLD to discover the link corresponding to the first AP, a TBTT information type field in a TBTT information header field corresponding to the first AP in the RNR element included in the second frame is set to 1, a TBTT information length field in the TBTT information header field is set to 3 or (3+X), and X is a positive integer.

With reference to the second aspect, in some implementations of the second aspect, the first information is located in the first TID-to-link mapping element included in the first frame; and the second information is located in an AP power management field corresponding to the first AP in the RNR element included in the first frame, and/or is located in a power management field in a basic multi-link element included in the first frame.

According to a third aspect, a communication method is provided. The method may be performed by an AP MLD, or may be performed by a component (for example, a chip or a circuit) of the AP MLD. This is not limited. For ease of description, an example in which the method is performed by the AP MLD is used below for description.

The method includes: The AP MLD generates a first frame. The first frame includes first information, second information, fifth information, and sixth information, the first information and the fifth information indicate that a link corresponding to an affiliated first AP of the AP MLD is unavailable, the second information indicates that the first AP is in a power saving mode, and the sixth information indicates a second non-AP MLD to ignore the first information. The AP MLD sends the first frame.

That the AP MLD sends the first frame means that the AP MLD sends the first frame by using one or more affiliated APs of the AP MLD.

Based on the foregoing technical solution, the first frame sent by the AP MLD includes the first information and the second information. In this case, when the first AP is in the power saving mode, the first information can indicate that the link corresponding to the first AP is unavailable, so that a first non-AP MLD determines, based on the first information, that the link corresponding to the first AP is unavailable, to avoid a transmission failure caused by performing transmission on the link corresponding to the first AP by the first non-AP MLD when the first AP is in the power saving mode.

In addition, the first frame may further include the fifth information and the sixth information. In this case, when the first AP is in the power saving mode, the sixth information may indicate the second non-AP MLD to ignore the first information, so that the second non-AP MLD ignores the first information based on the sixth information, and determines, based on the second information, that the first AP is in the power saving mode. It may be understood that, when the second non-AP MLD determines that the first AP is in the power saving mode, the second non-AP MLD may wake up the first AP by using a wake-up operation, to perform data receiving/sending on the link corresponding to the first AP. This is equivalent to that for the second non-AP MLD, the link corresponding to the first AP is available.

It should be noted that words such as "fifth" and "sixth" before the "fifth information" and the "sixth information" are merely used as information numbers to distinguish between different information, and do not mean that the first frame definitely includes the third information and the fourth information when the first frame includes the fifth information and the sixth information.

For example, the second non-AP MLD is an ultra-high reliability (ultra-high reliability, UHR) non-AP MLD.

For example, the first information is located in a first TID-to-link mapping element included in the first frame. For example, if the first TID-to-link mapping element indicates that no TID is allowed to be transmitted on the link corresponding to the first AP, it indicates that the first information indicates that the link corresponding to the first AP is unavailable.

For example, the second information is located in an AP power management field corresponding to the first AP in an RNR element included in the first frame, and/or is located in a power management field in a basic multi-link element included in the first frame. For example, if the first frame is a broadcast beacon frame, the second information may be located in the AP power management field corresponding to the first AP in the RNR element included in the first frame, and/or be located in the power management field in the basic multi-link element included in the first frame. For another example, if the first frame is an association response frame sent by the AP MLD to the first non-AP MLD, or is a reassociation response frame sent by the AP MLD to the first non-AP MLD, the second information may be located in the power management field in the basic multi-link element included in the first frame.

For example, the fifth information is located in a disabled link indication field corresponding to the first AP in an RNR element included in the first frame.

For example, the sixth information is located in a first TID-to-link mapping element included in the first frame.

With reference to the third aspect, in some implementations of the third aspect, the first frame further includes seventh information, and the seventh information is used by the second non-AP MLD to determine a mapping relationship between a TID and the link corresponding to the first AP.

Based on the foregoing technical solution, the second non-AP MLD may determine, based on the seventh information, a TID that is allowed to be transmitted on the link corresponding to the first AP.

With reference to the third aspect, in some implementations of the third aspect, the first frame further includes eighth information, and the eighth information indicates duration in which the first AP is in the power saving mode.

Based on the foregoing technical solution, the second non-AP MLD may determine, based on the eighth information, the duration in which the first AP is allowed to be in the power saving mode.

For example, the eighth information is located in an expected duration field corresponding to the first AP in the RNR element included in the first frame, and/or is located in an expected duration field in a common information field in a basic multi-link element included in the first frame.

According to a fourth aspect, a communication method is provided. The method may be performed by a second non-AP MLD, or may be performed by a component (for example, a chip or a circuit) of the second non-AP MLD. This is not limited. For ease of description, an example in which the method is performed by the second non-AP MLD is used below for description.

The method includes: The second non-AP MLD receives a first frame from an AP MLD. The first frame includes first information, second information, fifth information, and sixth information, the first information and the fifth information indicate that a link corresponding to an affiliated first AP of the AP MLD is unavailable, the second information indicates that the first AP is in a power saving mode, and the sixth information indicates the second non-AP MLD to ignore the first information. The second non-AP MLD ignores the first information based on the sixth information, and when it is determined, based on the second information, that the first AP is in the power saving mode, determines that the link corresponding to the first AP is available.

For beneficial effect of the fourth aspect and implementations of the fourth aspect, refer to the descriptions of the third aspect.

With reference to the fourth aspect, in some implementations of the fourth aspect, the first frame further includes seventh information, and the seventh information is used by the second non-AP MLD to determine a mapping relationship between a TID and the link corresponding to the first AP.

It should be understood that, when the first frame includes the seventh information, after receiving the first frame, the second non-AP MLD may determine the mapping relationship between a TID and the link corresponding to the first AP based on the seventh information.

With reference to the fourth aspect, in some implementations of the fourth aspect, the first information and the sixth information are located in a first TID-to-link mapping element included in the first frame; the second information is located in an AP power management field corresponding to the first AP in an RNR element included in the first frame, and/or is located in a power management field in a basic multi-link element included in the first frame; and the fifth information is located in a disabled link indication field corresponding to the first AP in the RNR element included in the first frame.

With reference to the fourth aspect, in some implementations of the fourth aspect, the first frame further includes eighth information, and the eighth information indicates duration in which the first AP is in the power saving mode.

It should be understood that, when the first frame includes the eighth information, after receiving the first frame, the second non-AP MLD may determine, based on the eighth information, the duration in which the first AP is in the power saving mode.

With reference to the fourth aspect, in some implementations of the fourth aspect, the eighth information is located in an expected duration field corresponding to the first AP in the RNR element included in the first frame, and/or is located in an expected duration field in a common information field in a basic multi-link element included in the first frame.

According to a fifth aspect, a communication method is provided. The method may be performed by an AP MLD, or may be performed by a component (for example, a chip or a circuit) of the AP MLD. This is not limited. For ease of description, an example in which the method is performed by the AP MLD is used below for description.

The method includes: The AP MLD generates a second frame. An RNR element included in the second frame is used by a first non-AP MLD to discover a link corresponding to an affiliated first AP of the AP MLD, a TBTT information field type that is in a TBTT information header field corresponding to the first AP and that is included in the RNR element is set to 1, a TBTT information length field in the TBTT information header field is set to 3 or (3+X), X is a positive integer, and the first AP is in a power saving mode. The AP MLD sends the second frame.

That the AP MLD sends the second frame means that the AP MLD sends the second frame by using the one or more affiliated APs of the AP MLD.

Based on the foregoing technical solution, when the affiliated first AP of the AP MLD is in the power saving mode, the AP MLD may send the second frame, so that the first non-AP MLD can discover the link corresponding to the first AP based on the second frame. In addition, when the TBTT information field type that is in the TBTT information header field corresponding to the first AP and that is included in the second frame is set to 1, a pre-EHT non-AP MLD cannot identify the TBTT information field type. In this way, the pre-EHT non-AP MLD can be prevented from discovering the link corresponding to the first AP.

For example, the first non-AP MLD is an EHT non-AP MLD.

With reference to the fifth aspect, in some implementations of the fifth aspect, the method further includes: The AP MLD receives an association request frame from the first non-AP MLD. The association request frame is used to request to establish the link corresponding to the first AP. The AP MLD sends an association response frame to the first non-AP MLD.

According to a sixth aspect, a communication method is provided. The method may be performed by a first non-AP MLD, or may be performed by a component (for example, a chip or a circuit) of the first non-AP MLD. This is not limited. For ease of description, an example in which the method is performed by the first non-AP MLD is used below for description.

The method includes: The first non-AP MLD receives a second frame from an AP MLD. An RNR element included in the second frame is used by the first non-AP MLD to discover a link corresponding to an affiliated first AP of the AP MLD, a TBTT information field type that is in a TBTT information header field corresponding to the first AP and that is included in the RNR element is set to 1, a TBTT information length field in the TBTT information header field is set to 3 or (3+X), X is a positive integer, and the first AP is in a power saving mode. The AP MLD sends the second frame. The first non-AP MLD sends an association request frame to the AP MLD based on the second frame. The association request frame is used to request to establish the link corresponding to the first AP.

For beneficial effect of the sixth aspect, refer to the descriptions of the fifth aspect.

According to a seventh aspect, a communication method is provided. The method may be performed by an AP MLD, or may be performed by a component (for example, a chip or a circuit) of the AP MLD. This is not limited. For ease of description, an example in which the method is performed by the AP MLD is used below for description.

The method includes: The AP MLD generates a third frame. The third frame includes eighth information, and the eighth information indicates duration in which an affiliated first AP of the AP MLD is in a power saving mode. The AP MLD sends the third frame.

That the AP MLD sends the third frame means that the AP MLD sends the third frame by using one or more affiliated APs of the AP MLD.

Based on the foregoing technical solution, the second non-AP MLD may determine, based on the eighth information, the duration in which the first AP is allowed to be in the power saving mode.

For example, the second non-AP MLD is a UHR non-AP MLD.

For example, the eighth information is located in an expected duration field corresponding to the first AP in the RNR element included in the third frame, and/or is located in an expected duration field in a common information field in a basic multi-link element included in the third frame.

According to an eighth aspect, a communication method is provided. The method may be performed by a second non-AP MLD, or may be performed by a component (for example, a chip or a circuit) of the second non-AP MLD. This is not limited. For ease of description, an example in which the method is performed by the second non-AP MLD is used below for description.

The method includes: The second non-AP MLD receives a third frame from an AP MLD. The third frame includes eighth information, and the eighth information indicates duration in which an affiliated first AP of the AP MLD is in a power saving mode. The second non-AP MLD determines, based on the eighth information, the duration in which the first AP is in the power saving mode.

Based on the foregoing technical solution, the second non-AP MLD may determine, based on the eighth information, the duration in which the first AP is allowed to be in the power saving mode.

For example, the eighth information is located in an expected duration field corresponding to the first AP in the RNR element included in the third frame, and/or is located in an expected duration field in a common information field in a basic multi-link element included in the third frame.

According to a ninth aspect, an apparatus is provided. The apparatus is configured to perform the method according to any one of the foregoing aspects or the foregoing implementations of the foregoing aspects. Specifically, the apparatus may include units and/or modules configured to perform the method according to any one of the foregoing aspects or the foregoing implementations of the foregoing aspects, for example, a processing unit and/or a transceiver unit.

In an implementation, the apparatus is a device (for example, an AP MLD, a first non-AP MLD, or a second non-AP MLD). When the apparatus is a device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the device (for example, the AP MLD, the first non-AP MLD, or the second non-AP MLD). When the apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a tenth aspect, an apparatus is provided. The apparatus includes: a memory, configured to store a program; and at least one processor, configured to execute the computer program or instructions stored in the memory, to perform the method according to any one of the first aspect or the implementations of the first aspect.

In an implementation, the apparatus is a device (for example, an AP MLD, a first non-AP MLD, or a second non-AP MLD).

In another implementation, the apparatus is a chip, a chip system, or a circuit used in the device (for example, the AP MLD, the first non-AP MLD, or the second non-AP MLD).

According to an eleventh aspect, this application provides a processor, configured to perform the method according to any one of the foregoing aspects or the foregoing implementations of the foregoing aspects.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a twelfth aspect, a computer-readable storage medium is provided. The computer-readable medium stores program code to be executed by a device, and the program code includes the method according to any one of the foregoing aspects or the foregoing implementations of the foregoing aspects.

According to a thirteenth aspect, a computer program product including instructions is provided. When the computer program product is run on a computer, the computer is enabled to perform the method according to any one of the foregoing aspects or the foregoing implementations of the foregoing aspects.

According to a fourteenth aspect, a chip is provided. The chip includes a processor and a communication interface. The processor reads, through the communication interface, instructions stored in a memory, to perform the method according to any one of the foregoing aspects or the foregoing implementations of the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the foregoing aspects or the foregoing implementations of the foregoing aspects.

According to a fifteenth aspect, a communication system is provided, including the foregoing AP MLD and at least one of the foregoing first non-AP MLD and the foregoing second non-AP MLD.

### BRIEF DESCRIPTION OF DRAWINGS

FIG. 1 is a diagram of an application scenario applicable to this application;
FIG. 2 is a diagram of a structure of an AP MLD applicable to this application;
FIG. 3 shows a communication connection between a non-AP MLD and an AP MLD;
FIG. 4 is a diagram of a structure of an MLD parameter;
FIG. 5 is a schematic flowchart of a method according to an embodiment of this application;
FIG. 6 is a diagram of a structure of a TID-to-link mapping element;
FIG. 7 is a diagram of a structure of an RNR element;
FIG. 8 is a diagram of a structure of a basic multi-link element;
FIG. 9 is a diagram of another structure of an MLD parameter;
FIG. 10 is a diagram of another structure of a basic multi-link element;
FIG. 11 is a diagram of another structure of a TID-to-link mapping element;
FIG. 12 is a schematic flowchart of a method according to another embodiment of this application;
FIG. 13 is a diagram of a structure of a TBTT information header field;
FIG. 14 is a schematic flowchart of a method according to another embodiment of this application;
FIG. 15 is a diagram of an apparatus 2000 according to an embodiment of this application;
FIG. 16 is a diagram of an apparatus 3000 according to an embodiment of this application; and
FIG. 17 is a diagram of a chip system 4000 according to an embodiment of this application.

### DESCRIPTION OF EMBODIMENTS

The following describes technical solutions of this application with reference to accompanying drawings.

The technical solutions provided in embodiments of this application may be applied to a wireless local area network (wireless local area network, WLAN) scenario, for example, support an institute of electrical and electronics engineers (institute of electrical and electronics engineers, IEEE) 802.11 related standard, for example, the 802.11a/b/g standard, the 802.11n standard, the 802.11ac standard, the 802.11ax standard, or an IEEE 802.11ax next-generation Wi-Fi protocol such as 802.11be, Wi-Fi 7, extremely high throughput (extremely high throughput, EHT), 802.11ad, 802.11ay, or 802.11bf, for another example, a next generation of 802.11be, or Wi-Fi 8; may be further applied to an ultra-wideband (ultra-wideband, UWB)-based wireless personal area network system, for example, 802.15 series standards; and may be further applied to a sensing system, for example, 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficient, HE), and the 802.11be standard is referred to as an EHT.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The communication systems applicable to this application are merely examples for description, and the communication systems applicable to this application are not limited thereto. This is described herein once for all, and details are not described below again.

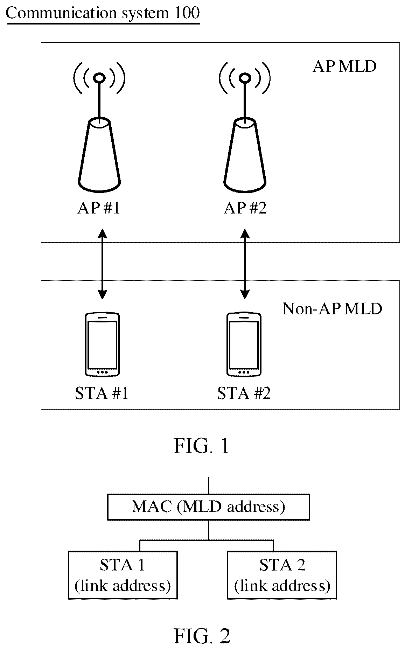

FIG. 1 is a diagram of a communication system 100 applicable to an embodiment of this application. As shown in FIG. 1, a technical solution in this embodiment of this application may be applied to a wireless local area network. The communication system 100 may include at least one multi-link device (multi-link device, MLD). For example, the communication system 100 shown in FIG. 1 may include at least one access point (access point, AP) multi-link device (AP MLD) and at least one non-AP multi-link device (non-AP MLD). The AP MLD may include, for example, an AP #1 and an AP #2, and the non-AP MLD may include, for example, a STA #1 and a STA #2. The AP #1 may communicate with the STA #1. For example, the AP #1 communicates with the STA #1 after an association relationship is established between the AP #1 and the STA #1. The AP #2 may communicate with the STA #2. For example, the AP #2 communicates with the STA #2 after an association relationship is established between the AP #2 and the STA #2.

The multi-link device means that the device has a plurality of radio frequency modules that separately operate on different bands or channels. For example, the band on which the multi-link device operates may include but is not limited to all or a part of sub (sub) 1 GHz, 2.4 GHz, 5 GHz, 6 GHz, and a high frequency 60 GHz. When a spacing between channels on which two radio frequency modules in one device operate is large enough, the two radio frequency modules may operate independently without interference to each other. Because operating bands of links are different, the multi-link device may also be referred to as a multi-band device (multi-band device). The multi-link device supports parallel transmission on a plurality of links, and therefore has higher transmission efficiency and a higher throughput.

The multi-link device includes one or more affiliated stations (affiliated station). The affiliated station may be a physical station or a logical station. Each affiliated station may operate on one link. An affiliated station included by the multi-link device may also be referred to as an auxiliary station of the multi-link device. The affiliated station may be an access point (access point, AP) station, or may be a non-access point station (non-access point station, non-AP STA), which are respectively referred to as an AP station and a non-AP station for short. For ease of description, in this embodiment of this application, a multi-link device whose affiliated station is an AP may be referred to as a multi-link AP or an AP multi-link device (AP MLD), and a multi-link device whose affiliated station is a non-AP STA may be referred to as a multi-link non-AP STA, a non-AP multi-link device (non-AP MLD), or a STA MLD. The AP may also be referred to as a service access point (service access point, SAP), and the non-AP station may be referred to as a station or a STA for short.

An MLD has a media access control (media access control, MAC) address (affiliated STA MAC address) of an affiliated station of the MLD on each link, and the MAC address of the affiliated station may also be referred to as a link address (link address). In addition, each MLD has an MLD address, namely, an MLD MAC address, as shown in FIG. 2.

The non-AP MLD in this embodiment of this application is user equipment (user equipment, UE) that is allowed to communicate with the AP or the AP MLD. For example, the non-AP MLD may be user equipment that can be connected to the Internet, for example, a tablet computer, a notebook computer, an ultra-mobile personal computer (ultra-mobile personal computer, UMPC), a handheld computer, a netbook, a personal digital assistant (personal digital assistant, PDA), or a mobile phone, an internet of things node in an internet of things, a vehicle-mounted communication apparatus in vehicle-to-everything, or the like. The non-AP MLD may alternatively be a chip or a processing system in the foregoing user equipment.

The AP MLD in this embodiment of this application may be a terminal or a network device that provides a service for the non-AP MLD. For example, the AP MLD may be a communication entity like a communication server, a router, a switch, or a bridge, or the AP MLD may include various forms of macro base stations, micro base stations, relay stations, and the like. Certainly, the AP MLD may alternatively be a chip or a processing system in the foregoing various forms of devices. In this way, the method and functions in embodiments of this application are implemented.

Specific forms of the non-AP MLD and the AP MLD are not specifically limited in this embodiment of this application, and the foregoing is merely an example for description.

The multi-link device may implement wireless communication in compliance with 802.11 series protocols, for example, in compliance with the 802.11be protocol. The 802.11 protocol may be a protocol that supports 802.11be or is compatible with 802.11be. The multi-link device may implement communication with another device. The another device may be a multi-link device, or may not be a multi-link device. For example, the another device is a legacy (legacy) AP or a non-AP STA.

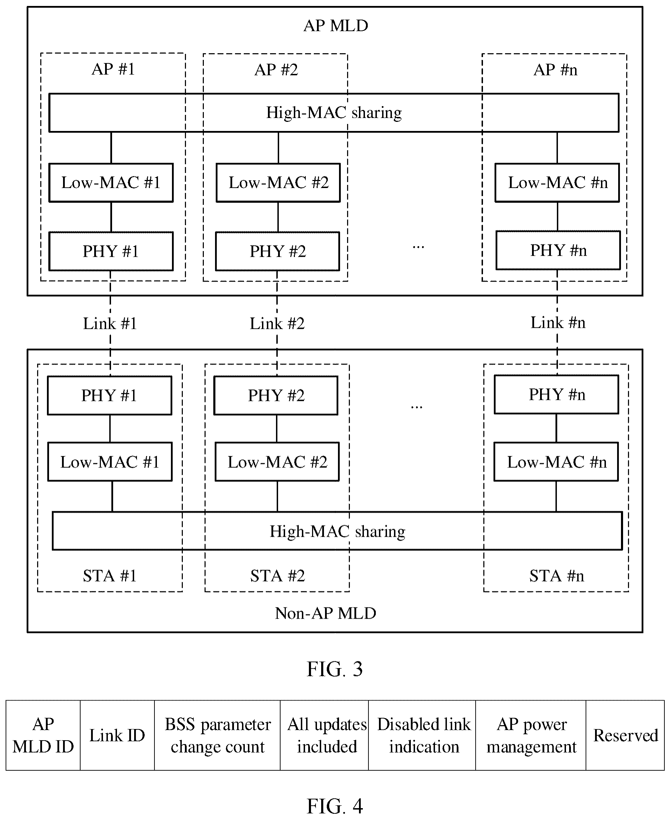

FIG. 3 shows a communication connection between a non-AP MLD and an AP MLD.

As shown in FIG. 3, the AP MLD may include a physical layer (physical layer, PHY) processing circuit (PHY #1, PHY #2, and PHY #n shown in FIG. 3) and a MAC layer processing circuit. The physical layer processing circuit may be configured to process a physical layer signal, and the MAC layer processing circuit may be configured to process a MAC layer signal. Further, a MAC layer may be further divided into one high-MAC (high-MAC) layer (for example, a high-MAC layer shown in FIG. 3) and a plurality of low-MAC (low-MAC) layers (for example, a low-MAC #1 layer, a low-MAC #2 layer, and a low-MAC #n layer shown in FIG. 3). The high-MAC layer is separately connected to the plurality of low-MAC layers. That is, the high-MAC layer is shared by a plurality of links. The high-MAC layer mainly completes operations such as allocation, encryption, and decryption of a sequence number (sequence number, SN) and a packet number (packet number, PN) of a MAC service data unit (MAC service data unit, MSDU). Each low-MAC layer mainly completes assembly, channel access, packet sending and receiving acknowledgment, and the like of a MAC protocol data unit (MAC protocol data unit, MPDU) of a link of the low-MAC layer. In FIG. 3, in the AP MLD, the PHY #1 layer, the low-MAC #1 layer, and the high-MAC layer may be considered as an AP #1, the PHY #2 layer, the low-MAC #2 layer, and the high-MAC layer may be considered as an AP #2, ..., and the PHY #n layer, the low-MAC #n layer, and the high-MAC layer may be considered as an AP #n. In other words, it may be understood that a multi-link AP includes n AP entities. The same is true to the non-AP MLD. To be specific, the high-MAC layer in the non-AP MLD is also shared by the plurality of links, the PHY #1 layer, the low-MAC #1 layer, and the high-MAC layer are considered as a STA #1, the PHY #2 layer, the low-MAC #2 layer, and the high-MAC layer are considered as a STA #2, ..., and the PHY #n layer, the low-MAC #n layer, and the high-MAC layer are considered as a STA #n. In other words, it may be understood that the non-AP MLD includes n STA entities.

As shown in FIG. 3, the PHY #1 of the AP #1 in the AP MLD is connected to the PHY #1 of the STA #1 in the non-AP MLD, and the AP #1 in the AP MLD and the STA #1 in the non-AP MLD communicate through a link (for example, a link #1 shown in FIG. 3). The PHY #2 of the AP #2 in the AP MLD is connected to the PHY #2 of the STA #2 in the non-AP MLD, and the AP #2 in the AP MLD and the STA #2 in the non-AP MLD communicate through a link (for example, a link #2 shown in FIG. 3). The PHY #n of the AP #n in the AP MLD is connected to the PHY #n of the STA #n in the non-AP MLD, and the AP #n in the AP MLD and the STA #n in the non-AP MLD communicate through a link (for example, a link #n shown in FIG. 3).

It should be noted that FIG. 3 is merely a simple diagram, and does not constitute any limitation on the protection scope of this application. For internal structures of the AP and the STA, refer to descriptions in the conventional technology, or refer to internal structures of the AP and the STA after future technology development. This is not limited in this application, and details are not described again. In addition, a quantity of affiliated STAs of the AP MLD and a quantity of affiliated STAs of the non-AP MLD may be the same or may be different. This is not limited in this application.

To reduce energy consumption of the AP MLD, a wakeup-based AP MLD power saving mechanism is defined. To be specific, indication information of an AP power management mode is added to a reduced neighbor report element (reduced neighbor report element, RNR element) sent by at least one affiliated AP (affiliated AP) of the AP MLD, for example, an AP power management field shown in FIG. 4. When the AP power management field is set to 0, it indicates that a corresponding affiliated AP is in an active (active) mode; and when the AP power management field is set to 1, it indicates that a corresponding affiliated AP is in a power saving mode. When the affiliated AP is in the power saving mode, in some time periods, the affiliated AP may be in a sleep state. In this case, a failure always occurs if an EHT non-AP MLD performs transmission on a link between the EHT non-AP MLD and the affiliated AP.

FIG. 4 is a diagram of a structure of an MLD parameter field carried in an RNR element. The MLD parameter field indicates an MLD related parameter, and may include the following subfields: an AP MLD identifier (AP MLD identifier, AP MLD ID) field, which is 8 bits (bits) and indicates an identifier of an AP MLD; a link ID (link ID) field, which is 4 bits and indicates a link identifier corresponding to a reporting AP; a basic service set (basic service set, BSS) parameters change count (BSS parameters change count) field, which is 8 bits and indicates a BSS parameters change count, where the BSS parameters change count increases when a key change occurs in the reporting AP, or remains unchanged when no key change occurs in the reporting AP; an all updates included field, which is 1 bit and indicates whether all updated information elements are carried in a frame for a latest key update, where if the all updates included field is set to 1, it indicates that all the updated information elements are carried in a current frame; or if all the updated information elements are not carried in a current frame, the all updates included field is set to 0; a disabled link indication (disabled link indication) field, which is 1 bit and indicates whether a link corresponding to the reporting AP is disabled, where if the disabled link indication field is set to 1, it indicates that a link corresponding to the reporting AP is disabled; or if the disabled link indication field is set to 0, it indicates that a link corresponding to the reporting AP is not disabled; and a reserved (reserved) field, which is 2 bits.

In view of this, an embodiment of this application provides a communication method, to expect to prevent an EHT non-AP MLD from performing transmission on an unavailable link corresponding to an affiliated AP of an AP MLD.

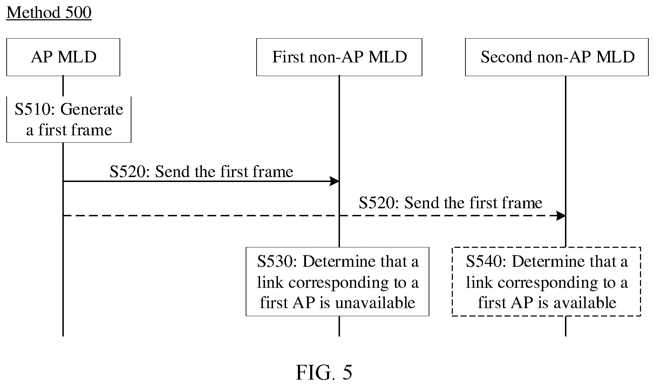

FIG. 5 is a schematic flowchart of a communication method according to an embodiment of this application. As shown in FIG. 5, the method 500 may include the following steps.

S510: An AP MLD generates a first frame.

The first frame includes first information and second information.

The first information indicates whether a link corresponding to an affiliated first AP of the AP MLD is available, and the link corresponding to the first AP is a link for which the first AP serves as a node of the link. That the link corresponding to the first AP is available means that transmission is allowed to be performed on the link corresponding to the first AP. That the link corresponding to the first AP is unavailable (or disabled (disabled)) means that transmission is disallowed to be performed on the link corresponding to the first AP. The first AP may be any one of a plurality of affiliated APs of the AP MLD.

For example, the first information is located in a first traffic identifier (traffic identifier, TID)-to-link mapping element (TID-to-link mapping element) included in the first frame.

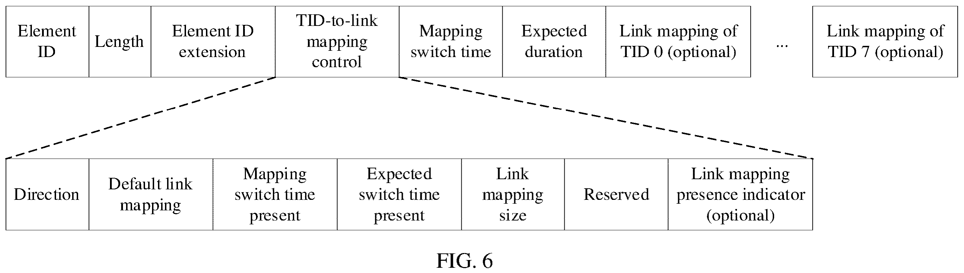

FIG. 6 is a diagram of a structure of a first TID-to-link mapping element. As shown in FIG. 6, the first TID-to-link mapping element may include the following fields: an element ID (element ID) field, which indicates an identifier of the first TID-to-link mapping element; a length (length) field, which indicates a length of the first TID-to-link mapping element; an element ID extension (element ID extension) field, which indicates extension information of the identifier of the first TID-to-link mapping element; a TID-to-link mapping control (TID-to-link mapping control) field; a mapping switch time (mapping switch time) field, which indicates when to switch to a TID-to-link (TID-to-link, T2L) mapping scheme indicated by the first TID-to-link mapping element, and is set to a value corresponding to 10 to 25 bits in a timing synchronization function (timing synchronization function, TSF) value; an expected duration (expected duration) field, which indicates effective duration of the T2L mapping scheme indicated by the first TID-to-link mapping element; and a link mapping of TID n (n=0, 1, 2, 3, 4, 5, 6, 7) (link mapping of TID n) field, which is an optional (optional) field, and indicates links onto which TID n is allowed to be mapped for transmission.

As shown in FIG. 6, the TID-to-link mapping control field may include the following fields: a direction (direction) field, where if the direction field is set to 0, it indicates that a direction is downlink; or if the direction field is set to 1, it indicates that a direction is uplink; or if the direction field is set to 2, it indicates that a direction is uplink and downlink; or if the direction field is set to 3, it indicates a reserved value; a default link mapping (default link mapping) field, where if the default link mapping field is set to 1, it indicates that default link mapping is used, in other words, any TID may be transmitted on any link; or if default link mapping is not used, the default link mapping field is set to 0; a mapping switch time present (mapping switch time present) field, which indicates whether the mapping switch time field is present; an expected duration present (expected duration present) field, which indicates whether the expected duration field is present; a link mapping size (link mapping size) field, which indicates a length of the link mapping of TID n field, where if the link mapping size field is set to 1, it indicates that the length of the link mapping of TID n field is 1 byte; or if the link mapping size field is set to 0, it indicates that the length of the link mapping of TID n field is 0; a link mapping presence indicator (link mapping presence indicator) field, which is an optional field, and indicates specific TIDs whose corresponding link mapping fields are present; and a reserved (reserved) field.

Based on the diagram of the structure of the first TID-to-link mapping element shown in FIG. 6, the first information may be located in the first TID-to-link mapping element. For example, if the first TID-to-link mapping element indicates that a specific TID is allowed to be transmitted on the link corresponding to the first AP, it indicates that the link corresponding to the first AP is available. For another example, if the first TID-to-link mapping element indicates that no TID is allowed to be transmitted on the link corresponding to the first AP, it indicates that the link corresponding to the first AP is unavailable.

The second information indicates whether the first AP is in a power saving mode. If the first AP is in the power saving mode, the first AP may be in an awake (awake) state or a sleep state, that is, the first AP may switch between an awake state and a sleep state. If the first AP is not in the power saving mode (or in an active mode), the first AP is always in an awake state.

For example, the second information is located in an AP power management (AP power management) field corresponding to the first AP in a reduced neighbor report element (reduced neighbor report element, RNR element) included in the first frame, and/or is located in a power management (power management) field in a basic multi-link element (basic multi-link element) included in the first frame. For example, if the first frame is a broadcast beacon (beacon) frame, the second information may be located in the AP power management field corresponding to the first AP in the RNR element included in the first frame, and/or be located in the power management field in the basic multi-link element included in the first frame. For another example, if the first frame is an association response (association response) frame sent by the AP MLD to a first non-AP MLD, or a reassociation response frame sent by the AP MLD to a first non-AP MLD, the second information may be located in the power management field in the basic multi-link element included in the first frame. The first non-AP MLD may be an EHT non-AP MLD.

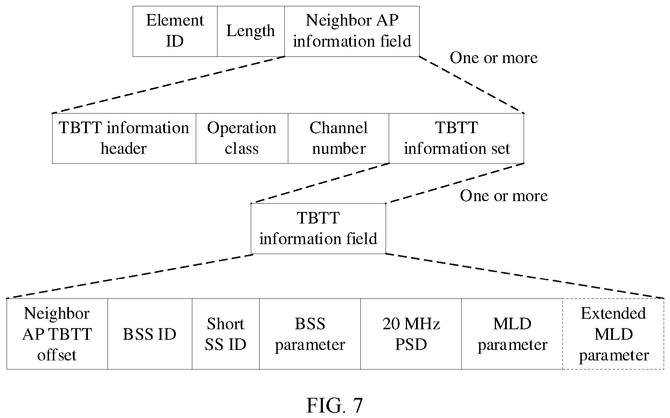

FIG. 7 is a diagram of a structure of an RNR element. As shown in FIG. 7, the RNR element may include the following fields: an element ID field, which indicates an identifier of the RNR element; a length field, which indicates a length of the RNR element; and one or more neighbor AP information fields (neighbor AP info fields). It should be understood that the one or more neighbor AP info fields include neighbor AP info fields corresponding to the first AP, and the neighbor AP info fields corresponding to the first AP are used to report information related to the first AP.

As shown in FIG. 7, the neighbor AP info fields may include the following fields: a target beacon transmission time (target beacon transmission time, TBTT) information header (TBTT info header) field; an operation class (option class) field, which indicates an operation class to which an operating channel of a reporting AP of the neighbor AP info fields belongs; a channel number (channel number) field, which indicates a channel number corresponding to the operating channel of the reporting AP of the neighbor AP info fields; and one or more TBTT info set information set (TBTT info set) fields.

As shown in FIG. 7, the TBTT information set field may include a TBTT information field (TBTT info fields). The TBTT information field may include the following fields: a neighbor AP target beacon transmission time offset (neighbor AP TBTT offset) field, which indicates an offset between a beacon (beacon) frame sending time of a basic service set (basic service set, BSS) to which the reporting AP of the neighbor AP info fields belongs and a beacon frame sending time of a BSS for sending the report; a BSS ID field, which indicates the BSS to which the reporting AP of the neighbor AP info fields belongs; a short service set identifier (short service set identifier, short SS ID) field, which indicates a service set identifier of the BSS to which the reporting AP of the neighbor AP info fields belongs; a BSS parameter (BSS parameters) field, which indicates a related parameter of the basic service set to which the reporting AP of the neighbor AP info fields belongs; a 20 MHz power spectral density (power spectral density, PSD) field, which indicates a maximum transmit power spectral density; and an MLD parameter (MLD parameters) field. A structure of the MLD parameter field is shown in FIG. 4 above. Optionally, the TBTT information field may further include a newly defined extended MLD parameter (extended MLD parameters) field, and the newly defined extended MLD parameter field may include an AP power management field.

Based on the diagrams of the structures of the RNR element shown in FIG. 4 and FIG. 7, the second information may be located in the AP power management field in the MLD parameter field in the TBTT information field in the TBTT information set field included in the neighbor AP info fields corresponding to the first AP in the RNR element. For example, if the AP power management field is set to 0, the AP power management field (or the second information) may indicate that the first AP is in the active mode. If the AP power management field is set to 1, the AP power management field (or the second information) indicates that the first AP is correspondingly in the power saving mode. If the TBTT information field in the TBTT information set field included in the neighbor AP info fields corresponding to the first AP further includes the extended MLD parameter field, the second information may be further located in the AP power management field in the newly defined extended MLD parameter field.

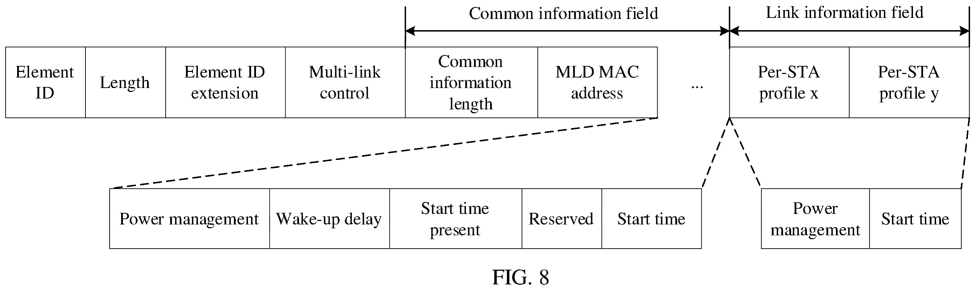

FIG. 8 is a diagram of a structure of a basic multi-link element. As shown in FIG. 8, the basic multi-link element may include the following fields: an element ID field, which indicates an identifier of the basic multi-link element; a length field, which indicates a length of the basic multi-link element; an element ID extension field, which indicates identifier extension information of the basic multi-link element; a common information field (common info fields), which carries common information of a plurality of affiliated stations in a multi-link device and information about the multi-link device; and a link information field (link info fields), which carries information about a station on each link of the multi-link device. As shown in FIG. 8, a per-STA profile x (per-STA profile x) carries information about a station x, and a per-STA profile y (per-STA profile y) carries information about a station y.

As shown in FIG. 8, the common info fields may include the following fields: a common information length (common info length) field, which indicates a length of the common info fields; an MLD MAC address (MLD MAC address) field, which indicates a high-MAC layer address of the multi-link device; a power management (power management) field, which indicates a power management mode that the AP is about to enter, where if the power management field is set to 0, it indicates that the AP is about to enter an active mode; or if the power management field is set to 1, it indicates that the AP is about to enter a power saving mode; a wakeup delay (wakeup delay) field, which indicates a time period before the AP switches to an awake state after receiving a wakeup request when the AP is in the power saving mode and is in the sleep state (or referred to as a dormant state); a start time present (start time present) field, which indicates whether a start time (start time) field is present; and a start time field, which indicates a time period before the AP switches to the power mode indicated by the power management field. The link information field (for example, the per-STA profile x shown in FIG. 8) may include the following fields: a power management field, which indicates a power management mode that the AP is about to enter, where if the power management field is set to 0, it indicates that the AP is about to enter the active mode; or if the power management field is set to 1, it indicates that the AP is about to enter the power saving mode; and a start time field, which indicates a time period before switching to the power mode indicated by the power management field. When the start time field in the common info fields or the link information field is 0 or is not present, the power management field in the common info fields or the link information field indicates a power management mode of the AP.

Based on the diagram of the structure of the basic multi-link element shown in FIG. 8, the second information may be located in the common info fields included in the basic multi-link element or a power management field in a per-STA profile corresponding to the first AP. The per-STA profile corresponding to the first AP carries information about the first AP. For example, if the power management field is set to 0, the power management field (or the second information) may indicate that the first AP is in the active mode. If the power management field is set to 1, the power management field (or the second information) indicates that the first AP is correspondingly in the power saving mode.

It should be noted that, when the first frame includes the first information and the second information, if the second information indicates that the first AP is in the active mode, the first information may indicate that the link corresponding to the first AP is available, or indicate that the link corresponding to the first AP is unavailable. If the second information indicates that the first AP is in the power saving mode, the first information indicates that the link corresponding to the first AP is unavailable.

Optionally, the link corresponding to the first AP is in a power saving mode after a first moment, the first frame further includes third information, the third information indicates that the link corresponding to the first AP is unavailable after a second moment, and the second moment is not later than the first moment. For example, the third information indicates the second moment. Correspondingly, after the first non-AP MLD determines the second moment based on the third information, the second moment is used as a start moment at which the link corresponding to the first AP is unavailable, which is equivalent to that the third information indicates that the link corresponding to the first AP is unavailable after the second moment.

For example, the third information is located in the first TID-to-link mapping element included in the first frame. Based on the diagram of the structure of the first TID-to-link mapping element shown in FIG. 6, the third information may be located in the mapping switch time field in the TID-to-link mapping control field included in the first TID-to-link mapping element.

Optionally, the link corresponding to the first AP is in the power saving mode after the first moment, the first frame further includes ninth information, and the ninth information indicates that the first AP is in the power saving mode after the first moment. For example, the ninth information is located in the basic multi-link element. Based on the diagram of the structure of the basic multi-link element shown in FIG. 8, the ninth information may be located in the common info fields included in the basic multi-link element or the start time field in the per-STA profile corresponding to the first AP.

It should be understood that a value of the common info fields included in the basic multi-link element or the start time field in the per-STA profile corresponding to the first AP is the same as a value of the mapping switch time field included in the first TID-to-link mapping element, or a moment (namely, the first moment) indicated by the common info fields included in the basic multi-link element or the start time field in the per-STA profile corresponding to the first AP is earlier than a moment (namely, the second moment) indicated by the mapping switch time field included in the first TID-to-link mapping element.

Optionally, the link corresponding to the first AP is in the power saving mode in first duration after the first moment, the first frame further includes fourth information, the fourth information indicates that the link corresponding to the first AP is unavailable in second duration, and the second duration is not less than the first duration. It should be understood that the second duration is not less than the first duration when the first moment is the same as the second moment. When the second moment is earlier than the first moment, the second duration is greater than the first duration, a third moment is not later than a fourth moment, the third moment is after the first moment, duration between the third moment and the first moment is the first duration, the fourth moment is after the second moment, and duration between the fourth moment and the second moment is the second duration. For example, the fourth information indicates the second duration. Correspondingly, after the first non-AP MLD determines the second duration based on the fourth information, the second duration is used as duration in which the link corresponding to the first AP is unavailable, which is equivalent to that the fourth information indicates that the duration in which the link corresponding to the first AP is unavailable is the second duration.

For example, the fourth information is located in the first TID-to-link mapping element included in the first frame. Based on the diagram of the structure of the first TID-to-link mapping element shown in FIG. 6, the fourth information may be located in the expected duration field in the TID-to-link mapping control field included in the first TID-to-link mapping element.

Optionally, the link corresponding to the first AP is in the power saving mode in the first duration after the first moment, the first frame further includes eighth information, and the eighth information indicates duration (namely, the first duration) in which the first AP is in the power saving mode.

For example, the eighth information is located in a newly-added expected duration field in the basic multi-link element and/or the RNR element. For example, if the first frame is a broadcast beacon frame, the eighth information may be located in the newly-added expected duration field in the RNR element included in the first frame, and/or be located in the newly-added expected duration field in the basic multi-link element included in the first frame. For another example, if the first frame is an association response frame sent by the AP MLD to the first non-AP MLD, or is a reassociation response frame sent by the AP MLD to the first non-AP MLD, the eighth information may be located in the newly-added expected duration field in the basic multi-link element included in the first frame.

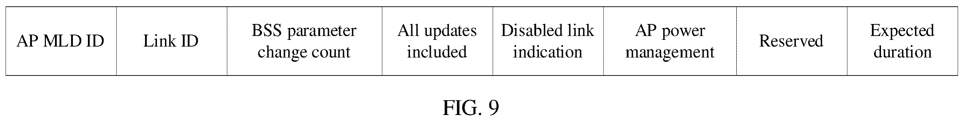

FIG. 9 is a diagram of another structure of an MLD parameter field included in an RNR element. As shown in FIG. 9, the MLD parameter field may further include the expected duration field, which indicates duration in which a corresponding AP is in the power management mode indicated by the AP power management field. Based on the diagrams of the structures of the RNR element shown in FIG. 7 and FIG. 9, the eighth information may be located in the expected duration field in the MLD parameter field in the TBTT information field in the TBTT information set field included in the neighbor AP info fields corresponding to the first AP in the RNR element. Optionally, if the TBTT information field in the TBTT information set field included in the neighbor AP info fields corresponding to the first AP further includes the extended MLD parameter field, the eighth information may also be located in the expected duration field in the newly defined extended MLD parameter field.

It should be understood that a value of the expected duration field in the MLD parameter field included in the RNR element is the same as a value of the expected duration field included in the first TID-to-link mapping element, or duration (namely, the first duration) indicated by the expected duration field in the MLD parameter field included in the RNR element is less than duration (namely, the second duration) indicated by the expected duration field included in the first TID-to-link mapping element.

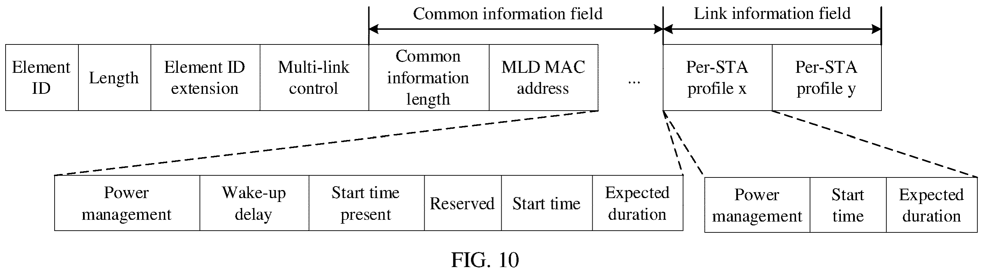

FIG. 10 is a diagram of another structure of a basic multi-link element. As shown in FIG. 10, the common info fields included in the basic multi-link element or the per-STA profile corresponding to the first AP further includes the expected duration field, which indicates the duration in which the AP is in the power management mode indicated by the power management field. Based on the diagram of the structure of the basic multi-link element shown in FIG. 10, the eighth information may be located in the common info fields included in the basic multi-link element or the expected duration field in the per-STA profile corresponding to the first AP.

It should be understood that a value of the common info fields included in the basic multi-link element or the expected duration field in the per-STA profile corresponding to the first AP is the same as a value of the expected duration field included in the first TID-to-link mapping element, or duration (namely, the first duration) indicated by the common info fields included in the basic multi-link element or the expected duration field in the per-STA profile corresponding to the first AP is less than duration (namely, the second duration) indicated by the expected duration field included in the first TID-to-link mapping element.

Optionally, the first frame is a broadcast beacon frame, and the first frame may further include fifth information. The fifth information indicates whether the link corresponding to the first AP is available.

For example, the fifth information is located in a disabled link indication field corresponding to the first AP in the RNR element included in the first frame.

Based on the diagrams of the structures of the RNR element shown in FIG. 4 and FIG. 7, the fifth information may be located in a disabled link indication field in the MLD parameter field in the TBTT information field in the TBTT information set field included in the neighbor AP info fields corresponding to the first AP in the RNR element. For example, if the disabled link indication field is set to 1, the disabled link indication field (or the fifth information) may indicate that the link corresponding to the first AP is unavailable. If the disabled link indication field is set to 0, the disabled link indication field (or the fifth information) indicates that the link corresponding to the first AP is available.

It should be noted that, when the first frame includes the first information, the second information, and the fifth information, if the second information indicates that the first AP is in the active mode, the first information and the fifth information may indicate that the link corresponding to the first AP is available, or the first information and the fifth information indicate that the link corresponding to the first AP is unavailable. If the second information indicates that the first AP is in the power saving mode, the first information and the fifth information indicate that the link corresponding to the first AP is unavailable for the first non-AP MLD.

Optionally, the first frame is a broadcast beacon frame, and the first frame may further include sixth information. The sixth information indicates, to a second non-AP MLD, whether to ignore the first information.

For example, the sixth information may be located in the first TID-to-link mapping element included in the first frame. The second non-AP MLD may be an ultra-high reliability (ultra-high reliability, UHR) non-AP MLD.

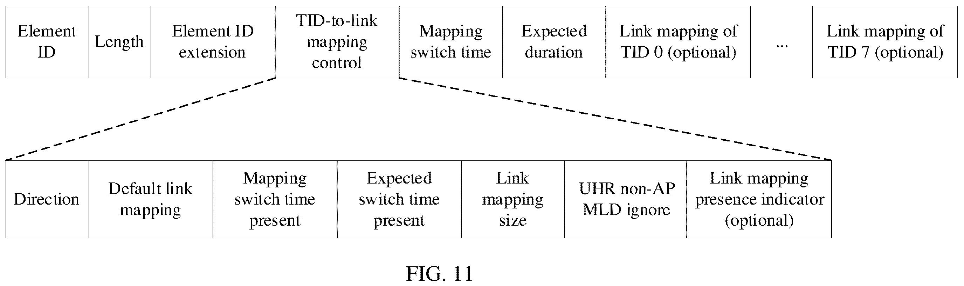

FIG. 11 is a diagram of another structure of a first TID-to-link mapping element. As shown in FIG. 11, the first TID-to-link mapping element may further include a UHR non-AP MLD ignore (UHR non-AP MLD ignore) field, which indicates, to the UHR non-AP MLD, whether to ignore the first TID-to-link mapping element, or indicates, to the UHR non-AP MLD, whether to ignore the first information.

Based on the diagram of the structure of the first TID-to-link mapping element shown in FIG. 11, the sixth information may be located in the UHR non-AP MLD ignore field included in the first TID-to-link mapping element. For example, if the UHR non-AP MLD ignore field is set to 0, it indicates that the UHR non-AP MLD ignore field indicates the second non-AP MLD not to ignore the first TID-to-link mapping element, which is equivalent to that the sixth information indicates the second non-AP MLD not to ignore the first information. If the UHR non-AP MLD ignore field is set to 1, it indicates that the UHR non-AP MLD ignore field indicates the second non-AP MLD to ignore the first TID-to-link mapping element, which is equivalent to that the sixth information indicates the second non-AP MLD to ignore the first information. It may be understood that, when the UHR non-AP MLD ignore field is set to 0, the first TID-to-link mapping element is applicable to both the first non-AP MLD and the second non-AP MLD; or when the UHR non-AP MLD ignore field is set to 1, the first TID-to-link mapping element is applicable to the first non-AP MLD, but is not applicable to the second non-AP MLD.

It should be noted that, in this embodiment of this application, that a field command in which the sixth information is located is a UHR non-AP MLD ignore field is merely used as an example. A field in which the sixth information is located may also have another name. This is not limited in this embodiment of this application.

It should be further noted that, when the first frame includes the first information, the second information, the fifth information, and the sixth information, if the second information indicates that the first AP is in the active mode, the first information and the fifth information may indicate that the link corresponding to the first AP is available, or the first information and the fifth information indicate that the link corresponding to the first AP is unavailable, and the sixth information indicates the second non-AP MLD not to ignore the first information. If the second information indicates that the first AP is in the power saving mode, the first information and the fifth information indicate that the link corresponding to the first AP is unavailable for the first non-AP MLD, and the sixth information indicates the second non-AP MLD to ignore the first information.

It should be further noted that, when the first frame is a broadcast beacon frame, the first frame may include at least one of the first information and the fifth information.

Optionally, the first frame may further include seventh information. The seventh information is used by the second non-AP MLD to determine a mapping relationship between a TID and the link corresponding to the first AP, or the seventh information is used by the second non-AP MLD to determine a TID that is allowed to be transmitted on the link corresponding to the first AP.

In a possible implementation, if the first frame includes the first information and the sixth information, and the sixth information indicates the second non-AP MLD to ignore the first information, the first frame includes the seventh information.

In a possible implementation, if the first frame includes the first information, the fifth information, and the sixth information, and the sixth information indicates the second non-AP MLD to ignore the first information, the first frame includes the seventh information.

For example, the seventh information may be located in a second TID-to-link mapping element included in the first frame. A structure of the second TID-to-link mapping element may be shown in FIG. 6.

It should be understood that, when the first frame includes the first TID-to-link mapping element and the second TID-to-link mapping element, the element ID of the first TID-to-link mapping element is different from an element ID of the second TID-to-link mapping element. The second TID-to-link mapping element may be considered to correspond to the second non-AP MLD, and the first non-AP MLD does not parse the second TID-to-link mapping element.

S520: The AP MLD sends the first frame.

In S520, if the AP MLD sends the first frame in a broadcast manner, both the first non-AP MLD and the second non-AP MLD associated with the AP MLD may receive the first frame. In this case, the first frame may be a beacon frame.

Optionally, when the AP MLD sends the first frame in a broadcast manner, the RNR element included in the first frame may be further used by the first non-AP MLD to discover the link corresponding to the first AP. For more descriptions of the RNR element used by the first non-AP MLD to discover the link corresponding to the first AP, refer to descriptions of an RNR element included in a second frame in the following method 1200.

In S520, if the AP MLD sends the first frame to the first non-AP MLD in a unicast manner, the first non-AP MLD may receive the first frame, and the second non-AP MLD cannot receive the first frame. In this case, the first frame may be an association response frame or a reassociation response frame. It should be understood that the AP MLD may send the association response frame to the first non-AP MLD when receiving an association request frame from the first non-AP MLD. The AP MLD may send the reassociation response frame to the first non-AP MLD when receiving a reassociation request frame from the first AP MLD.

Optionally, before the AP MLD sends the first frame to the first non-AP MLD in the unicast manner, the method 500 further includes: The AP MLD sends the second frame. The RNR element included in the second frame is used by the first non-AP MLD to send the link corresponding to the first AP. For more descriptions of the second frame, refer to the following method 1200.

A manner in which the AP MLD sends the first frame may include: The AP MLD sends the first frame by using one or more affiliated APs of the AP MLD.

S530: The first non-AP MLD determines that the link corresponding to the first AP is unavailable.

If the first frame includes the first information, the first non-AP MLD may determine, based on the first information, that the link corresponding to the first AP is unavailable. If the first frame includes the first information and the fifth information, the first non-AP MLD may determine, based on the first information and/or the fifth information, that the link corresponding to the first AP is unavailable.

For example, if the first TID-to-link mapping element included in the first frame indicates that no TID is allowed to be transmitted on the link corresponding to the first AP, the first non-AP MLD may determine that the link corresponding to the first AP is unavailable. For another example, if the disabled link indication field corresponding to the first AP in the RNR element included in the first frame is set to 1, the first non-AP MLD may determine that the link corresponding to the first AP is unavailable.

Optionally, if the first frame further includes the third information, the first non-AP MLD may further determine, based on the third information, that the link corresponding to the first AP is unavailable after the second moment.

Optionally, if the first frame further includes the fourth information, the first non-AP MLD may further determine, based on the third information and the fourth information, that the link corresponding to the first AP is unavailable within the second duration after the second moment.

It should be understood that when the first non-AP MLD determines that the link corresponding to the first AP is unavailable, the first non-AP MLD does not perform any transmission on the link corresponding to the first AP.

Optionally, if the first non-AP MLD determines, based on the first frame, that the link corresponding to the first AP is unavailable within the second duration after the second moment, after the second duration starting from the second moment, the first non-AP MLD determines that the link corresponding to the first AP is available, and the first non-AP MLD may perform transmission on the link corresponding to the first AP.

Optionally, if the AP MLD sends the first frame in the broadcast manner, the method 500 may further include S540.

S540: The second non-AP MLD determines that the link corresponding to the first AP is available.

It should be understood that the first frame received by the second non-AP MLD may include the first information, the second information, the fifth information, and the sixth information, or include the first information, the second information, and the sixth information.

For example, if the second information included in the first frame indicates that the first AP is in the power saving mode, the first information and the fifth information indicate that the link corresponding to the first AP is unavailable for the first non-AP MLD, and the sixth information indicates the second non-AP MLD to ignore the first information, the second non-AP MLD ignores the first information based on the sixth information, and determines, based on the second information, that the first AP is in the power saving mode. It may be understood that, when the second non-AP MLD determines that the first AP is in the power saving mode, the second non-AP MLD may wake up the first AP by using a wakeup operation, to perform data receiving/sending on the link corresponding to the first AP. This is equivalent to that for the second non-AP MLD, the link corresponding to the first AP is available. It may be further understood that, even if the fifth information indicates that the link corresponding to the first AP is unavailable, the second non-AP MLD considers that the link corresponding to the first AP is available, which is equivalent to that when the second non-AP MLD ignores the first information based on the sixth information and determines, based on the second information, that the first AP is in the power saving mode, the second non-AP MLD ignores the fifth information by default.

For example, if the first TID-to-link mapping element included in the first frame indicates that no TID is allowed to be transmitted on the link corresponding to the first AP, the disabled link indication field corresponding to the first AP in the RNR element included in the first frame is set to 1, the UHR non-AP MLD ignore field in the first TID-to-link mapping element included in the first frame is set to 1, and the AP power management field corresponding to the first AP in the RNR element included in the first frame is set to 1, the second non-AP MLD determines that the first AP is in the power saving mode, and may wake up the first AP by using the wakeup operation, to perform data receiving and sending on the link corresponding to the first AP.

Optionally, when the second information indicates that the first AP is in the power saving mode, if the first frame further includes the ninth information, the second non-AP MLD may determine, based on the ninth information, that the link corresponding to the first AP is in the power saving mode after the first moment. In this case, the second non-AP MLD may also determine that the link corresponding to the first AP is available after the first moment.

Optionally, when the second information indicates that the first AP is in the power saving mode, if the first frame further includes the eighth information, the second non-AP MLD may determine, based on the ninth information and the eighth information, that the link corresponding to the first AP is in the power saving mode within the first duration after the first moment. In this case, the second non-AP MLD may also determine that the link corresponding to the first AP is available in the first duration after the first moment.

Optionally, if the first frame further includes the seventh information, the second non-AP MLD may determine, based on the seventh information, the TID that is allowed to be transmitted on the link corresponding to the first AP.

In this embodiment of this application, the first frame sent by the AP MLD includes the first information and the second information. In this case, when the first AP is in the power saving mode, the first information can indicate that the link corresponding to the first AP is unavailable, so that the first non-AP MLD determines, based on the first information, that the link corresponding to the first AP is unavailable, to avoid a transmission failure caused by performing transmission on the link corresponding to the first AP by the first non-AP MLD when the first AP is in the power saving mode.

In addition, if the AP MLD sends the first frame in the broadcast manner, the first frame may further include the sixth information, or include the fifth information and the sixth information. In this case, when the first AP is in the power saving mode, the sixth information may indicate the second non-AP MLD to ignore the first information, so that the second non-AP MLD ignores the first information based on the sixth information, and determines, based on the second information, that the first AP is in the power saving mode.

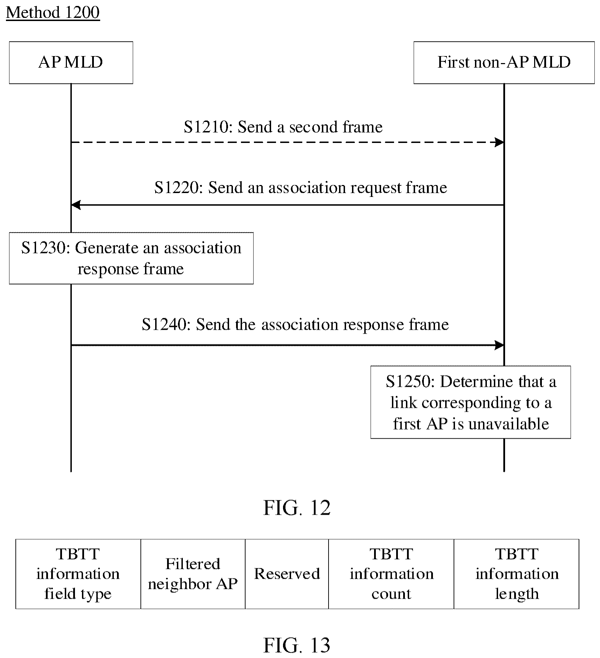

FIG. 12 is a schematic flowchart of a communication method according to another embodiment of this application. As shown in FIG. 12, the method 1200 may include the following steps.

S1210: An AP MLD sends a second frame.

The AP MLD sends the second frame in a broadcast manner. For example, the second frame is a beacon frame.

A manner in which the AP MLD sends the second frame may include: The AP MLD sends the second frame by using one or more affiliated APs of the AP MLD.

The second frame is used by a first non-AP MLD to discover a link corresponding to an affiliated first AP of the AP MLD, and the first AP is in a power saving mode.

When the first AP is in the power saving mode, the second frame includes second information, and the second information indicates that the first AP is in the power saving mode. For more descriptions of the second information, refer to S510 in the method 500.

A TBTT information field type (TBTT info fields type) that is in a TBTT information header field corresponding to the first AP and that is included in the second frame is set to 1, a TBTT information length (TBTT info length) field in the TBTT information header field is set to 3 or (3+X), and X is a positive integer. Correspondingly, after the first non-AP MLD receives the second frame, if the first non-AP MLD learns, through parsing, that the TBTT information field type in the TBTT information header field corresponding to the first AP is set to 1, the first non-AP MLD may continue to parse an MLD parameter field in a TBTT information field in a TBTT information set field included in neighbor AP info fields corresponding to the first AP in an RNR element, to discover the link corresponding to the first AP.

Based on the diagram of the structure of the RNR element shown in FIG. 7, the TBTT information header field corresponding to the first AP is located in the neighbor AP info fields corresponding to the first AP in the RNR element.

FIG. 13 is a diagram of a structure of a TBTT information header field. As shown in FIG. 13, the TBTT information header field may include the following fields: a TBTT information field type, which indicates a type of TBTT information, and indicates a format of the TBTT information field together with a TBTT information length field; a filtered neighbor AP (filtered neighbor AP) field, which indicates whether SS IDs of all BSSs carried in the neighbor AP information field match an SS ID in a probe request (probe request) frame; a reserved field; a TBTT information count (TBTT info count) field, which indicates a quantity of TBTT information fields included in the TBTT information set field; and the TBTT information length field, which indicates a length of each TBTT information field.

It should be noted that, if the TBTT information length field is set to 3, an AP power management field corresponding to the first AP is located in the MLD parameter field in the TBTT information field in the TBTT information set field included in the neighbor AP info fields corresponding to the first AP in the RNR element. If the TBTT information length field is set to (3+X), the AP power management field and expected duration corresponding to the first AP may be located in a newly defined field with a length of X bytes, for example, may be located in an extended MLD parameter subfield (extended MLD parameters subfield) in the TBTT information field in the TBTT information set field included in the neighbor AP info fields corresponding to the first AP in the RNR element. The AP power management field corresponding to the first AP indicates a power management mode that the first AP is about to enter, and the expected duration field corresponding to the first AP indicates duration in which the first AP is in the power management mode indicated by the AP power management field.

Optionally, the second frame may further include one or more of the first information, the third information, and the ninth information in the method 500.

It should be noted that, S1210 is an optional step. If the first non-AP MLD has discovered the link corresponding to the first AP before the first AP is in the power saving mode, that is, when the first AP is in an active mode, S1210 may not be performed in the method 1200.

S1220: The first non-AP MLD sends an association request frame to the AP MLD.

Correspondingly, the AP MLD receives the association request frame from the first non-AP MLD.

The association request frame is used to request to establish the link corresponding to the first AP.

S1230: The AP MLD generates an association response frame.

For more descriptions of the association response frame, refer to the descriptions of the first frame in the method 500.

S1240: The AP MLD sends the association response frame to the first non-AP MLD.

Correspondingly, the first non-AP MLD receives the association response frame from the AP MLD.

A manner in which the AP MLD sends the association response frame may include: The AP MLD sends the association response frame by using an affiliated AP of the AP MLD.

Optionally, if the first non-AP MLD does not receive the association response frame from the AP MLD, the first non-AP MLD may continue to send a reassociation request frame to the AP MLD. The reassociation request frame is used to request to establish the link corresponding to the first AP. Correspondingly, the AP MLD may send a reassociation response frame to the first non-AP MLD after receiving the reassociation request frame from the first non-AP MLD.

S1250: The first non-AP MLD determines that the link corresponding to the first AP is unavailable.

For S1250, refer to S530 in the method 500.

In this embodiment of this application, when the affiliated first AP of the AP MLD is in the power saving mode, the AP MLD may send the second frame, so that the first non-AP MLD can discover the link corresponding to the first AP based on the second frame. In addition, when the TBTT information field type that is in the TBTT information header field corresponding to the first AP and that is included in the second frame is set to 1, a pre-EHT non-AP MLD cannot identify the TBTT information field type. In this way, the pre-EHT non-AP MLD can be prevented from discovering the link corresponding to the first AP.

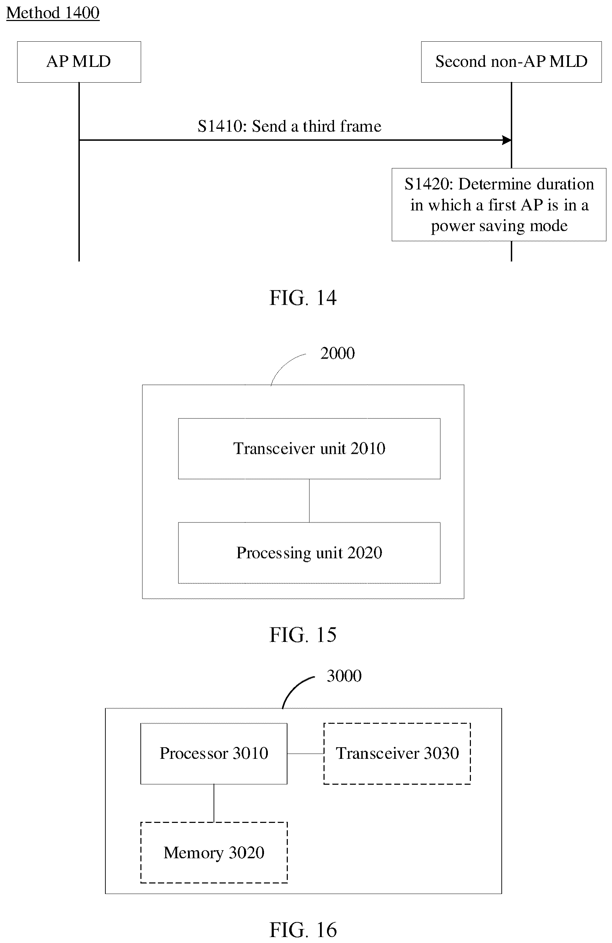

FIG. 14 is a schematic flowchart of a communication method according to another embodiment of this application. As shown in FIG. 14, the method 1400 may include the following steps.

S1410: The AP MLD sends a third frame.

A manner in which the AP MLD sends the third frame may include: The AP MLD sends the third frame by using one or more affiliated APs of the AP MLD.

The third frame includes eighth information, and the eighth information indicates duration in which an affiliated first AP of the AP MLD is in a power saving mode. For more descriptions of the eighth information, refer to S510 in the method 500.

It may be understood that, when the eighth information indicates that the affiliated first AP of the AP MLD is in the power saving mode, the third frame includes second information, and the second information indicates that the first AP is in the power saving mode. For more descriptions of the second information, refer to S510 in the method 500.

S 1420: A second non-AP MLD determines the duration in which the first AP is in the power saving mode.

The second non-AP MLD may determine, based on the eighth information included in the third frame, the duration in which the first AP is in the power saving mode.

In this embodiment of this application, the third frame sent by the AP MLD includes the eighth information. In this case, the second non-AP MLD can determine, based on the eighth information, the duration in which the first AP is in the power saving mode.

It should be understood that, in embodiments of this application, FIG. 5, FIG. 12, and FIG. 14 are merely used as examples to describe the methods provided in embodiments of this application. Sequence numbers of the foregoing processes do not mean execution sequences. Execution sequences of the processes should be determined based on functions and internal logic of the processes, and should not constitute any limitation on implementation processes of embodiments of this application.

It should be further understood that in some of the foregoing embodiments, a device (for example, an AP MLD, a first non-AP MLD, or a second non-AP MLD) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the AP MLD, the first non-AP MLD, or the second non-AP MLD) may also be implemented by a component (for example, a chip or a circuit) of the device.

It may be further understood that, to implement the foregoing functions, the AP MLD, the first non-AP MLD, and the second non-AP MLD include corresponding hardware structures and/or software modules for performing the functions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The following describes in detail apparatuses provided in embodiments of this application with reference to FIG. 15 to FIG. 17. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmitter device or the receiver device may be divided into functional modules based on the foregoing method embodiments. For example, the functional modules may be obtained through division based on functions, or two or more functions may be integrated into one processing module. The integrated module may be implemented in a form of hardware, or may be implemented in a form of a software functional module. It should be noted that, in embodiments of this application, division into modules is an example, and is merely a logical functional division. In actual implementation, another division manner may be used. An example in which each functional module is obtained through division based on each corresponding function is used below for description.

FIG. 15 is a block diagram of an apparatus according to an embodiment of this application. As shown in FIG. 15, an apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a communication unit.

Optionally, the apparatus 2000 may further include a storage unit. The storage unit may be configured to store instructions and/or data. The processing unit 2020 may read the instructions and/or the data in the storage unit, so that the apparatus implements the foregoing method embodiments.

In a first design, the apparatus 2000 may be the AP MLD in the foregoing embodiments, or may be a component (for example, a chip) of the AP MLD. The apparatus 2000 may implement a corresponding step or procedure performed by the AP MLD in the foregoing method embodiments. The transceiver unit 2010 may be configured to perform receiving and sending related operations of the AP MLD in the foregoing method embodiments. The processing unit 2020 may be configured to perform a processing related operation of the AP MLD in the foregoing method embodiments.

In a possible implementation, the processing unit 2020 is configured to generate a first frame. The first frame includes first information and second information, the first information indicates that a link corresponding to an affiliated first AP of the AP MLD is unavailable, and the second information indicates that the first AP is in a power saving mode. The transceiver unit 2010 is configured to send the first frame.

In another possible implementation, the processing unit 2020 is configured to generate a first frame. The first frame includes first information, second information, fifth information, and sixth information, the first information and the fifth information indicate that a link corresponding to an affiliated first AP of the AP MLD is unavailable, the second information indicates that the first AP is in a power saving mode, and the sixth information indicates a second non-AP MLD to ignore the first information. The transceiver unit 2010 is configured to send the first frame.

In still another possible implementation, the processing unit 2020 is configured to generate a second frame. An RNR element included in the second frame is used by a first non-AP MLD to discover a link corresponding to an affiliated first AP of the AP MLD, a TBTT information field type that is in a TBTT information header field corresponding to the first AP and that is included in the RNR element is set to 1, a TBTT information length field in the TBTT information header field is set to 3 or (3+X), X is a positive integer, and the first AP is in a power saving mode. The transceiver unit 2010 is configured to send the second frame.

In yet another possible implementation, the processing unit 2020 is configured to generate a third frame. The third frame includes eighth information, and the eighth information indicates duration in which an affiliated first AP of the AP MLD is in a power saving mode. The transceiver unit 2010 is configured to send the third frame.

In a second design, the apparatus 2000 may be the first non-AP MLD in the foregoing embodiments, or may be a component (for example, a chip) of the first non-AP MLD. The apparatus 2000 may implement a corresponding step or procedure performed by the first non-AP MLD in the foregoing method embodiments. The transceiver unit 2010 may be configured to perform receiving and sending related operations of the first non-AP MLD in the foregoing method embodiments. The processing unit 2020 may be configured to perform a processing related operation of the first non-AP MLD in the foregoing method embodiments.

In a possible implementation, the transceiver unit 2010 is configured to receive a first frame from an AP MLD. The first frame includes first information and second information, the first information indicates that a link corresponding to an affiliated first AP of the AP MLD is unavailable, and the second information indicates that the first AP is in a power saving mode. The processing unit 2020 is configured to determine, based on the first information, that the link corresponding to the first AP is unavailable.

In another possible implementation, the transceiver unit 2010 is configured to receive a second frame from an AP MLD. An RNR element included in the second frame is used by the first non-AP MLD to discover a link corresponding to an affiliated first AP of the AP MLD, a TBTT information field type that is in a TBTT information header field corresponding to the first AP and that is included in the RNR element is set to 1, a TBTT information length field in the TBTT information header field is set to 3 or (3+X), X is a positive integer, and the first AP is in a power saving mode. The transceiver unit 2010 is further configured to send an association request frame to the AP MLD based on the second frame. The association request frame is used to request to establish the link corresponding to the first AP.

In a third design, the apparatus 2000 may be the second non-AP MLD in the foregoing embodiments, or may be a component (for example, a chip) of the second non-AP MLD. The apparatus 2000 may implement a corresponding step or procedure performed by the second non-AP MLD in the foregoing method embodiments. The transceiver unit 2010 may be configured to perform receiving and sending related operations of the second non-AP MLD in the foregoing method embodiments. The processing unit 2020 may be configured to perform a processing related operation of the second non-AP MLD in the foregoing method embodiments.

In a possible implementation, the transceiver unit 2010 is configured to receive a first frame from an AP MLD. The first frame includes first information, second information, fifth information, and sixth information, the first information and the fifth information indicate that a link corresponding to an affiliated first AP of the AP MLD is unavailable, the second information indicates that the first AP is in a power saving mode, and the sixth information indicates the second non-AP MLD to ignore the first information. The processing unit 2020 is configured to: ignore the first information based on the sixth information, and when it is determined, based on the second information, that the first AP is in the power saving mode, determine that the link corresponding to the first AP is available.

In another possible implementation, the transceiver unit 2010 is configured to receive a third frame from the AP MLD. The third frame includes eighth information, and the eighth information indicates duration in which an affiliated first AP of the AP MLD is in a power saving mode. The processing unit 2020 is configured to determine, based on the eighth information, the duration in which the first AP is in the power saving mode.

It should be understood that a specific process in which the units perform the foregoing corresponding steps is described in detail in the foregoing method embodiments. For brevity, details are not described herein.

It should be understood that the apparatus 2000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 may be specifically the AP MLD in the foregoing embodiments, and may be configured to perform procedures and/or steps corresponding to the AP MLD in the foregoing method embodiments. Alternatively, the apparatus 2000 may be specifically the non-AP MLD (for example, the first non-AP MLD or the second non-AP MLD) in the foregoing embodiments, and may be configured to perform procedures and/or steps corresponding to the non-AP MLD in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit.

The apparatus in FIG. 15 may be a device (for example, the AP MLD, the first non-AP MLD, or the second non-AP MLD) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The apparatus 2000 in each of the foregoing solutions has a function of implementing corresponding steps performed by the AP MLD or the non-AP MLD in the foregoing methods. The function may be implemented by hardware, or may be implemented by hardware executing corresponding software. The hardware or software includes one or more modules corresponding to the foregoing function. For example, the transceiver unit may be replaced with a transceiver machine (for example, a sending unit of the transceiver unit may be replaced with a transmitter machine, and a receiving unit of the transceiver unit may be replaced with a receiver machine), and another unit such as the processing unit may be replaced with a processor, to separately perform the sending/receiving operations and the processing-related operations in the method embodiments.

FIG. 16 is a diagram of an apparatus 3000 according to an embodiment of this application. The apparatus 3000 includes a processor 3010. The processor 3010 is configured to execute a computer program or instructions stored in a memory 3020, or read data/signaling stored in a memory 3020, to perform the methods in the foregoing method embodiments. Optionally, there are one or more processors 3010.

Optionally, as shown in FIG. 16, the apparatus 3000 further includes a memory 3020, and the memory 3020 is configured to store a computer program or instructions and/or data. The memory 3020 may be integrated with the processor 3010, or may be disposed separately. Optionally, there are one or more memories 3020.

Optionally, as shown in FIG. 16, the apparatus 3000 further includes a transceiver 3030, and the transceiver 3030 is configured to receive and/or send a signal. For example, the processor 3010 is configured to control the transceiver 3030 to receive the signal and/or send the signal.

In a solution, the apparatus 3000 is configured to implement operations performed by the AP MLD in the foregoing method embodiments.

For example, the processor 3010 is configured to execute the computer program or instructions stored in the memory 3020, to implement related operations performed by the AP MLD in the foregoing method embodiments, for example, the method performed by the AP MLD in the embodiment shown in FIG. 5, FIG. 12, or FIG. 14.

In another solution, the apparatus 3000 is configured to implement operations performed by the first non-AP MLD in the foregoing method embodiments.

For example, the processor 3010 is configured to execute the computer program or instructions stored in the memory 3020, to implement related operations performed by the first non-AP MLD in the foregoing method embodiments, for example, the method performed by the first non-AP MLD in the embodiment shown in FIG. 5 or FIG. 12.

In another solution, the apparatus 3000 is configured to implement operations performed by second non-AP MLD in the foregoing method embodiments.

For example, the processor 3010 is configured to execute the computer program or instructions stored in the memory 3020, to implement related operations performed by the second non-AP MLD in the foregoing method embodiments, for example, the method performed by the second non-AP MLD in the embodiment shown in FIG. 5 or FIG. 14.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

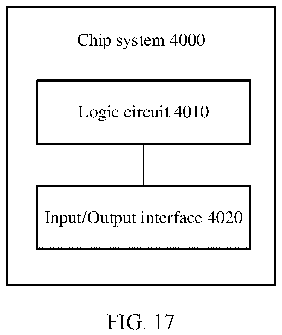

FIG. 17 is a diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

Specifically, for example, if the chip system 4000 is installed in an AP MLD, the logic circuit 4010 is coupled to the input/output interface 4020, the logic circuit 4010 may send a first frame through the input/output interface 4020, and the first frame may be generated by the logic circuit 4010. For another example, if the chip system 4000 is installed in a non-AP MLD (for example, a first non-AP MLD or a second non-AP MLD), the logic circuit 4010 is coupled to the input/output interface 4020, the logic circuit 4010 may receive a first frame through the input/output interface 4020, and the logic circuit 4010 parses the first frame.

In a solution, the chip system 4000 is configured to implement operations performed by the AP MLD in the foregoing method embodiments.

For example, the logic circuit 4010 is configured to implement a processing related operation performed by the AP MLD in the foregoing method embodiments, for example, a processing related operation performed by the AP MLD in the embodiment shown in FIG. 5, FIG. 12, or FIG. 14. The input/output interface 4020 is configured to implement a sending and/or receiving related operation performed by the AP MLD in the foregoing method embodiments, for example, a sending and/or receiving related operation performed by the AP MLD in the embodiment shown in FIG. 5, FIG. 12, or FIG. 14.

In another solution, the chip system 4000 is configured to implement operations performed by the first non-AP MLD in the foregoing method embodiments.

For example, the logic circuit 4010 is configured to implement a processing related operation performed by the first non-AP MLD in the foregoing method embodiments, for example, a processing related operation performed by the first non-AP MLD in the embodiment shown in FIG. 5 or FIG. 12. The input/output interface 4020 is configured to implement a sending and/or receiving related operation performed by the first non-AP MLD in the foregoing method embodiments, for example, a sending and/or receiving related operation performed by the first non-AP MLD in the embodiment shown in FIG. 5 or FIG. 12.

In another solution, the chip system 4000 is configured to implement operations performed by the second non-AP MLD in the foregoing method embodiments.

For example, the logic circuit 4010 is configured to implement a processing related operation performed by the second non-AP MLD in the foregoing method embodiments, for example, a processing related operation performed by the second non-AP MLD in the embodiment shown in FIG. 5 or FIG. 14. The input/output interface 4020 is configured to implement a sending and/or receiving related operation performed by the second non-AP MLD in the foregoing method embodiments, for example, a sending and/or receiving related operation performed by the second non-AP MLD in the embodiment shown in FIG. 5 or FIG. 14.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the AP MLD in the foregoing method embodiments.

For another example, when the computer program is executed by a computer, the computer is enabled to implement the method performed by the non-AP MLD (for example, the first non-AP MLD or the second non-AP MLD) in the foregoing method embodiments.

An embodiment of this application further provides a computer program product, including instructions. When the instructions are executed by a computer, the method performed by a device (for example, an AP MLD, a first non-AP MLD, or a second non-AP MLD) in the foregoing method embodiments is implemented.

An embodiment of this application further provides a communication system, including the foregoing AP MLD and at least one of the foregoing first non-AP MLD and the foregoing second non-AP MLD.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by an access point multi-link device AP MLD, a first frame, wherein the first frame comprises first information and second information, the first information indicates that a link corresponding to an affiliated first access point AP of the AP MLD is unavailable, and the second information indicates that the first AP is in a power saving mode; and
sending, by the AP MLD, the first frame.

2. The method according to claim 1, wherein the link corresponding to the first AP is in a power saving mode after a first moment, the first frame further comprises third information, the third information indicates that the link corresponding to the first AP is unavailable after a second moment, and the second moment is not later than the first moment.

3. The method according to claim 2, wherein the link corresponding to the first AP is in the power saving mode within first duration after the first moment, the first frame further comprises fourth information, the fourth information indicates that duration in which the link corresponding to the first AP is unavailable is second duration, and the second duration is not less than the first duration.

4. The method according to claim 3, wherein the third information is located in a mapping switch time field in a first traffic identifier TID-to-link mapping element comprised in the first frame, and the fourth information is located in an expected duration field in the first TID-to-link mapping element.

5. The method according to any one of claims 1 to 4, wherein the first frame is a beacon frame, the first frame further comprises fifth information, and the fifth information indicates that the link corresponding to the first AP is unavailable.

6. The method according to claim 5, wherein the fifth information is located in a disabled link indication field corresponding to the first AP in a reduced neighbor report RNR element comprised in the first frame.

7. The method according to any one of claims 1 to 4, wherein
the first frame is an association response frame, and before sending, by the AP MLD, the first frame, the method further comprises:
receiving, by the AP MLD, an association request frame from a first non-AP MLD, wherein the association request frame is used to request to establish the link corresponding to the first AP; or
the first frame is a reassociation response frame, and before sending, by the AP MLD, the first frame, the method further comprises:
receiving, by the AP MLD, a reassociation request frame from a first non-AP MLD, wherein the reassociation request frame is used to request to establish the link corresponding to the first AP.

8. The method according to any one of claims 1 to 7, wherein the method further comprises:
sending, by the AP MLD, a second frame, wherein an RNR element comprised in the second frame is used by the first non-AP MLD to discover the link corresponding to the first AP, a target beacon transmission time TBTT information type field in a TBTT information header field corresponding to the first AP in the RNR element comprised in the second frame is set to 1, a TBTT information length field in the TBTT information header field is set to 3 or (3+X), and X is a positive integer.

9. The method according to any one of claims 1 to 8, wherein the first information is located in the first TID-to-link mapping element comprised in the first frame; and
the second information is located in an AP power management field corresponding to the first AP in the RNR element comprised in the first frame, and/or is located in a power management field in a basic multi-link element comprised in the first frame.

10. A communication method, comprising:
receiving, by a first non-access point multi-link device non-AP MLD, a first frame from an access point multi-link device AP MLD, wherein the first frame comprises first information and second information, the first information indicates that a link corresponding to an affiliated first access point AP of the AP MLD is unavailable, and the second information indicates that the first AP is in a power saving mode; and
determining, by the first non-AP MLD based on the first information, that the link corresponding to the first AP is unavailable.

11. The method according to claim 10, wherein the link corresponding to the first AP is in a power saving mode after a first moment, the first frame further comprises third information, the third information indicates that the link corresponding to the first AP is unavailable after a second moment, and the second moment is not later than the first moment.

12. The method according to claim 11, wherein the link corresponding to the first AP is in the power saving mode within first duration after the first moment, the first frame further comprises fourth information, the fourth information indicates that duration in which the link corresponding to the first AP is unavailable is second duration, and the second duration is not less than the first duration.

13. The method according to claim 12, wherein the third information is located in a mapping switch time field in a first traffic identifier TID-to-link mapping element comprised in the first frame, and the fourth information is located in an expected duration field in the first TID-to-link mapping element.

14. The method according to any one of claims 10 to 13, wherein the first frame is a beacon frame, the first frame further comprises fifth information, and the fifth information indicates that the link corresponding to the first AP is unavailable.

15. The method according to claim 14, wherein the fifth information is located in a disabled link indication field corresponding to the first AP in a reduced neighbor report RNR element comprised in the first frame.

16. The method according to any one of claims 10 to 13, wherein
the first frame is an association response frame, and before receiving, by the first non-AP MLD, the first frame from the AP MLD, the method further comprises:
sending, by the first non-AP MLD, an association request frame to the AP MLD, wherein the association request frame is used to request to establish the link corresponding to the first AP; or
the first frame is a reassociation response frame, and before receiving, by the first non-AP MLD, the first frame from the AP MLD, the method further comprises:
sending, by the first non-AP MLD, a reassociation request frame to the AP MLD, wherein the reassociation request frame is used to request to establish the link corresponding to the first AP.

17. The method according to any one of claims 10 to 16, wherein the method further comprises:
receiving, by the first non-AP MLD, a second frame from the AP MLD, wherein an RNR element comprised in the second frame is used by the first non-AP MLD to discover the link corresponding to the first AP, a target beacon transmission time TBTT information type field in a TBTT information header field corresponding to the first AP in the RNR element comprised in the second frame is set to 1, a TBTT information length field in the TBTT information header field is set to 3 or (3+X), and X is a positive integer.

18. The method according to any one of claims 10 to 17, wherein the first information is located in the first TID-to-link mapping element comprised in the first frame; and
the second information is located in an AP power management field corresponding to the first AP in the RNR element comprised in the first frame, and/or is located in a power management field in a basic multi-link element comprised in the first frame.

19. A communication method, comprising:
generating, by an access point multi-link device AP MLD, a first frame, wherein the first frame comprises first information, second information, fifth information, and sixth information, the first information and the fifth information indicate that a link corresponding to an affiliated first access point AP of the AP MLD is unavailable, the second information indicates that the first AP is in a power saving mode, and the sixth information indicates a second non-access point multi-link device non-AP MLD to ignore the first information; and
sending, by the AP MLD, the first frame.

20. The method according to claim 19, wherein the first frame further comprises seventh information, and the seventh information is used by the second non-AP MLD to determine a mapping relationship between a traffic identifier TID and the link corresponding to the first AP.

21. The method according to claim 19 or 20, wherein the first information and the sixth information are located in a first TID-to-link mapping element comprised in the first frame;
the second information is located in an AP power management field corresponding to the first AP in a reduced neighbor report RNR element comprised in the first frame, and/or is located in a power management field in a basic multi-link element comprised in the first frame; and
the fifth information is located in a disabled link indication field corresponding to the first AP in the RNR element comprised in the first frame.

22. The method according to any one of claims 19 to 21, wherein the first frame further comprises eighth information, and the eighth information indicates duration in which the first AP is in the power saving mode.

23. The method according to claim 22, wherein the eighth information is located in an expected duration field corresponding to the first AP in the RNR element comprised in the first frame, and/or is located in an expected duration field in a common information field in a basic multi-link element comprised in the first frame.

24. A communication method, comprising:
receiving, by a second non-access point multi-link device non-AP MLD, a first frame from an access point multi-link device AP MLD, wherein the first frame comprises first information, second information, fifth information, and sixth information, the first information and the fifth information indicate that a link corresponding to an affiliated first access point AP of the AP MLD is unavailable, the second information indicates that the first AP is in a power saving mode, and the sixth information indicates the second non-AP MLD to ignore the first information; and
ignoring, by the second non-AP MLD, the first information based on the sixth information, and when it is determined, based on the second information, that the first AP is in the power saving mode, determining that the link corresponding to the first AP is available.

25. The method according to claim 24, wherein the first frame further comprises seventh information, and the seventh information is used by the second non-AP MLD to determine a mapping relationship between a TID and the link corresponding to the first AP.

26. The method according to claim 24 or 25, wherein the first information and the sixth information are located in a first TID-to-link mapping element comprised in the first frame;
the second information is located in an AP power management field corresponding to the first AP in a reduced neighbor report RNR element comprised in the first frame, and/or is located in a power management field in a basic multi-link element comprised in the first frame; and
the fifth information is located in a disabled link indication field corresponding to the first AP in the RNR element comprised in the first frame.

27. The method according to any one of claims 24 to 26, wherein the first frame further comprises eighth information, and the eighth information indicates duration in which the first AP is in the power saving mode.

28. The method according to claim 27, wherein the eighth information is located in an expected duration field corresponding to the first AP in the RNR element comprised in the first frame, and/or is located in an expected duration field in a common information field in a basic multi-link element comprised in the first frame.

29. An apparatus, wherein the apparatus comprises a unit configured to perform the method according to any one of claims 1 to 9, or comprises a unit configured to perform the method according to any one of claims 10 to 18, or comprises a unit configured to perform the method according to any one of claims 19 to 23, or comprises a unit configured to perform the method according to any one of claims 24 to 28.

30. An apparatus, comprising:
a processor, configured to execute computer instructions stored in a memory, to enable the apparatus to perform the method according to any one of claims 1 to 9, or to enable the apparatus to perform the method according to any one of claims 10 to 18, or to enable the apparatus to perform the method according to any one of claims 19 to 23, or to enable the apparatus to perform the method according to any one of claims 24 to 28.

31. The apparatus according to claim 30, wherein the apparatus further comprises the memory.

32. The apparatus according to claim 30 or 31, wherein the apparatus further comprises a communication interface, and the communication interface is coupled to the processor; and
the communication interface is configured to: input and/or output information.

33. A computer-readable storage medium, configured to store a computer program, wherein the computer program comprises instructions used to implement the method according to any one of claims 1 to 9, or comprises instructions used to implement the method according to any one of claims 10 to 18, or comprises instructions used to implement the method according to any one of claims 19 to 23, or comprises instructions used to implement the method according to any one of claims 24 to 28.
